# EUROPEAN PATENT APPLICATION

(11) **EP 1 650 822 A1**
(43) Date of publication of application: **26.04.2006**
(21) Application number: 03786474.1
(22) Date of filing: 23.12.2003
(51) Int. Cl.: H01M 8/10, H01M 8/12

(54) **CERIUM DIOXIDE-BASED ELECTRODE-ELECTROLYTE PAIR (VARIANTS), METHOD FOR THE PRODUCTION THEREOF (VARIANTS) AND ORGANOGEL**

(30) Priority: 10.06.2003 RU 2003117218
(71) Applicant: Hilchenko, Galina Vitalevna, Moscow 129343 (RU); Myatiyev, Ata Atayevich, Moscow, 127083 (RU)
(72) Inventor: Hilchenko, Galina Vitalevna, Moscow 129343 (RU); Myatiyev, Ata Atayevich, Moscow, 127083 (RU)
(74) Representative: Henrion, Oliver
(86) International application number: PCT/RU2003/000575
(87) International publication number: WO 2004/109835

(57) **Abstract**

This invention relates to the field of electric power generation by direct transformation of the chemical energy of gaseous fuel to electric power by means of high-temperature solid oxide fuel cells.

The invention can be used for the fabrication of miniaturized thin filmed oxygen sensors, in electrochemical devices for oxygen extraction from air and in catalytic electrochemical devices for waste gas cleaning or hydrocarbon fuels conversion.

The technical objective of the invention is the production of a low-cost electrode-electrolyte pair having an elevated electrochemical efficiency as the most important structural part of a highly efficient, economically advantageous and durable fuel cell. Furthermore, the invention achieves additional objectives.

The achievement of these objectives is exemplified with two electrode-electrolyte pair designs and their fabrication methods, including with the use of a special organogel.

## Description

### Technical field

This invention relates to the field of electric power generation by direct transformation of the chemical energy of gaseous fuel to electric power by means of high-temperature solid oxide fuel cells.

Additionally, the invention can be used for the fabrication of miniaturized thin filmed oxygen sensors, in electrochemical devices for oxygen extraction from air and in catalytic electrochemical devices for waste gas cleaning or hydrocarbon fuels conversion.

### State of the Art.

Over the recent years, major attempt has been made world over aimed at the development of high-temperature oxide fuel cells that act as unique devices for the generation of electric power from natural or synthetic gaseous fuels.

A high-temperature fuel cell consists of two porous electrodes having an electronic conductivity type and a dense electrolyte in the space between them having an ionic conductivity type. The gaseous fuel is located at the side of one of the electrodes. The oxidizing agent, typically air, is located at the side of the other electrode.

The most important component of the oxide fuel cell structure that determines the efficiency of electric current generation is the electrode-electrolyte pair. The electrolyte of the fuel cell is typically doped cerium dioxide which has a good conductivity of oxygen ions. Furthermore, the use of cerium dioxide electrolyte allows reducing the fuel cell working temperature from 900 - 1000 °C to 600 - 700 °C. Note that the working temperature reduction objective is a top priority one for the current research in this field.

The following electrode-electrolyte pairs are known.

Known is an electrode-electrolyte pair with a working temperature of 950°C wherein, aiming at reducing the cathodic overstressing and the chemical interaction between the main electrolyte consisting of yttrium-stabilized cerium dioxide and a the cathode material consisting of lanthanum manganite, a gadolinium doped cerium dioxide separation layer is introduced (US 6,139,985 A, published 2000).

However, cerium dioxide in this electrode-electrolyte pair is not independent electrolyte; rather, it has an auxiliary function.

Known is an electrode-electrolyte pair with a working temperature of 700°C wherein the porous anode surface is modified with a samarium doped cerium dioxide film aiming at reducing the cathodic overstressing (S.P.Yoon, J.Han, S.W.Nam et.al. Performance of anode-supported SOFC with Ni-YSZ or Ni-ceria anode modified by sol-gel coating technique, 5^{th} European Solid Oxide Fuel Cell Forum, 2002, Lucerne/Switzerland, Proceedings, pp.148-155).

However, the electrolyte in this electrode-electrolyte pair is stabilized zirconium dioxide instead of cerium dioxide, and this reduces the efficiency of the fuel cell.

Known are electrode-electrolyte pairs with working temperatures of 600 - 750°C wherein the main element is yttrium, gadolinium or samarium doped cerium dioxide (S.J.Visco, C.Jacobson, L.V.De Jonghe, Thin-film fuel Cells, Lawrence Berkeley National Laboratory).

However, the efficiency of this pair is insufficient. Moreover, the thermal expansion coefficient of cerium dioxide differs substantially from the thermal expansion coefficient of conventional electrode materials. The resulting thermal stresses may destruct the electrolyte layer and/or electrode. The thinner the electrolyte layer, the greater the probability of cracking therein.

The following electrode-electrolyte pair fabrication methods are known.

Known is an electrode-electrolyte pair fabrication method comprising depositing a coating containing water solutions with a polymerizing organic solvent (US 5494700 A, published 1996) comprising the steps of:
■ producing a water solution of zirconium and yttrium nitrates, chlorides or carbonates;
■ mixing said water solution with ethylene glycol to act as a polymerizing agent;
■ adding nitric, hydrochloric, citric or oxalic acid for solution pH optimization;
■ heating said mixture to 25 - 100°C for polymerization and viscosity optimization;
■ depositing said mixture onto the surface of the porous electrode;
■ drying the deposited mixture at about 300°C;
■ high temperature annealing for removal of all the impurities and crystallization of the yttrium-doped zirconium dioxide.

Disadvantages of this method are the strong dependence of the properties of the thus obtained electrolyte layer on the initial mixture polymerization degree and viscosity; poor adhesion to the electrode material; high content of impurities that impair the electrochemical properties of the electrolyte and the electrode-electrolyte pair; poor reproducibility of the method due to the complex chemical processes used for the production of the polymer solution; insufficient adaptability of the method with respect to the choice of electrolyte composition and the material and properties of the electrode.

Known also is an electrolyte film fabrication method from yttrium-doped cerium dioxide produced from cerium nitrate solution and yttrium chloride in a mixture of ethanol and butylcarbitol (50:50 vol.%) by spraying the aerosol onto the yttrium-stabilized Ni - ZrO₂ anode substrate heated to 250 - 300 °C (D.Perednis, L.J.Ganckler SOFCs with thin electrolyte films deposited by spray pyrolysis, 5^{th} European Solid Oxide Fuel Cell Forum, 2002, Lucerne/Switzerland, Proceedings, pp.72-75).

However, this method allows producing only very thin yttrium-doped cerium dioxide films in the structure of the cerium dioxide based two-layered electrolyte.

Known is an electrode-electrolyte pair fabrication method by depositing a coating containing gadolinium-doped cerium dioxide onto the electrode using a colloid solution of doped cerium dioxide fine particles in an organic polymer (H.U.Anderson, V.Petrowsky Thin film zirconia and ceria electrolytes for low temperature SOFCs, 5^{th} European Solid Oxide Fuel Cell Forum, 2002, Lucerne/Switzerland, Proceedings, pp.240-247).

This method is very suitable for the deposition of electrolyte powder on the electrode surface, but, in fact, the electrolyte layer forms on the electrode in this method due to electrolyte material powder sintering after the removal of the organic polymer. Even at very small powder size (5 nm) and its high sintering activity, the films have a porosity of 20%, and densening to 95% of the theoretical density occurs only at 1000 °C. As a result, the electrochemical properties of the electrolyte and the electrode-electrolyte pair are low.

Known is the colloid solution used in method (H.U.Anderson, V.Petrowsky Thin film zirconia and ceria electrolytes for low temperature SOFCs, 5^{th} European Solid Oxide Fuel Cell Forum, 2002, Lucerne/Switzerland, Proceedings, pp.240-247).

With all the technical advantages of this solution for the formation of a uniform powdered layer on the surface to be coated, an obvious disadvantage of colloid solutions is that the organic polymer does not contribute to the formation of the electrolyte dense structure. The necessity of sintering leads to unavoidable settling of the film and hence large stresses that promote cracking in the electrolyte layer at the electrolyte-electrode boundaries.

### Disclosure of the Invention.

The technical objective of the invention is the production of a low-cost electrode-electrolyte pair having an elevated electrochemical efficiency as the most important structural part of a highly efficient, economically advantageous and durable fuel cell.

Each of the inventions included into the group is aimed at achieving a separate additional objective.

More particularly, the electrode-electrolyte pair embodiment shown as the first and the fourth objectives of the invention in the suggested group of inventions achieve additional technical objectives comprising:
■ reduction of the working temperature of the electrochemical device comprising the electrode-electrolyte pair;
■ increasing the operation efficiency and reliability of the electrode-electrolyte pair;
■ reduction of the dimensions and weight per unit power generated by the fuel cell comprising the electrode-electrolyte pair;
■ adaptability of the design, materials and dimensions of the electrode.

Furthermore, the electrode-electrolyte pair fabrication methods shown as the second and fifth objectives of the invention in the suggested group of inventions achieve additional technical objectives comprising increasing the technological suitability of the method for commercial fabrication of the electrode-electrolyte pair, increasing the fabrication efficiency and reduction of the cost of the electrode-electrolyte pair and the entire electrochemical device, reduction of power consumption and increasing the adaptability of the method.

Furthermore, the organogel comprised in the components used for the fabrication of the first embodiment of the electrode-electrolyte pair and shown as the third objective of the invention in the suggested group of inventions achieves additional technical objectives comprising reducing the cost of the organogel, increasing its adaptability, increasing its adhesion to the electrode material and avoiding electrolyte contamination with detrimental impurities.

Below, embodiments of the electrode-electrolyte pair design, electrode-electrolyte pair fabrication methods and materials used are disclosed in accordance with the invention claimed herein that achieve said technical objective.

The first embodiment of the electrode-electrolyte pair comprises a microporous electrode to the surface of which is deposited a multilayered solid electrolyte based on zirconium dioxide with stabilizing additions. The solid electrolyte consists of the inner nanoporous three-dimensional solid electrolyte layer. The grain size of this electrolyte layer is within 1000 nm. The inner layer fills, at least partially, the surface pores of the microporous electrode to a depth of 5 - 50 µm. On the surface of the inner layer there is a dense outer electrode layer. The grain size of this electrolyte layer is also within 1000 nm.

In a specific embodiment, the inner and outer electrolyte layers may have similar or different compositions.

In some embodiments, the inner electrolyte layer has a combined amorphous and nanocrystalline structure.

Moreover, in a specific embodiment, the outer electrolyte layer has an amorphous structure.

Moreover, in specific embodiments, as the stabilizing additions, the solid electrolyte contains magnesium and/or calcium and/or yttrium and/or scandium and/or aluminum and/or rare earth metals and/or titanium.

In a specific embodiment, the electrode is in a microporous ceramic or metallic or metalloceramic material with pore sizes of above 1 µm.

Moreover, in a specific embodiment, the electrode of the pair is anode or cathode with a flat or pipe-like shape.

In a specific embodiment, the anode is made of a volume mesh or a foam material.

The electrolytic efficiency of the electrode-electrolyte pair and the entire electrochemical device is increased due to the following advantages:
■ increasing the lateral conductivity of the electrolyte due to the optimization of the outer and inner cerium dioxide layers by doping;
■ increasing the electric contact area of the electrolyte with the electrode material due to the use of the inner surface of electrode pores;
■ reduction of the electrical resistivity at the electrode-electrolyte boundary due to the low electrode deposition temperatures;
■ increasing the electrochemical contact area of the gaseous phase, the electrode and the electrolyte due to the nanoporous inner electrolyte layer and the surface conductivity.

Reduction of the working temperature of the electrochemical device consisting of the electrode-electrolyte pair is achieved due to the above advantages and the possibility of producing a dense electrolyte layer having a minimum thickness.

Increasing the operation efficiency and reliability of the electrode-electrolyte pair is achieved due to the high strength of the amorphous and nanocrystalline structure of cerium dioxide; elimination of the surface stress concentrators in the electrode due to the nanoporous inner electrode layer; the high damping capacity of the inner nanoporous and the three-dimensional electrolyte layers that avoid cracking in the electrolyte.

As is well known, the cost, dimensions and weight of an electrochemical generator consisting of fuel cells are determined as per unit generated power. Therefore any increase in the electrochemical efficiency of the electrode-electrolyte pair reduces the cost, dimensions and weight. For example, in the generation of 1 kW of electric power, an increase in the unit power from 0.25 W/cm² to 1 W/cm² results in a 4-fold cost reduction, decrease in the dimensions, i.e. fuel cell area, from 0.4 m² to 0.1 m² and a 4-fold weight reduction.

The increase in the adaptability of the device technology is achieved due to the possibility of using electrodes having a porosity of above 1 µm made from ceramic, metalloceramic and metallic materials, in the form of a cathode or anode having a flat or pipe shape.

The electrode-electrolyte pair fabrication method based on cerium dioxide following the first embodiment of the invention comprises the formation, on the microporous electrode surface, of a partially electrode-penetrating multilayered solid electrolyte based on cerium dioxide with stabilizing additions. During the formation, the microporous electrode surface is initially impregnated with organogel consisting of particles of cerium dioxide with stabilizing additions and an organic solution containing organic salts of cerium and the stabilizing metals. The next step is destruction of the organogel organic part that leads to the chemical deposition of the inner nanoporous three-dimensional solid electrolyte layer on the electrode surface. Then, the inner organogel layer is deposited onto the surface, said layer consisting of nanosized particles of cerium dioxide with stabilizing additions and an organic solution containing organic salts of cerium and the stabilizing metals. The next step is destruction of the organogel organic part that leads to the chemical deposition of the dense outer layer of the multilayered electrolyte onto the inner layer surface.

In a specific embodiment, the organogel used for the formation of the inner and outer solid electrolyte layers can be of similar or different compositions.

In specific embodiments, the stabilizing additions for the solid electrolyte according to this method can be yttrium and/or alkaline-earth metals and/or rare earth metals and/or bismuth.

In a specific embodiment, the microporous electrode surface is impregnated with organogel in vacuum or by mechanical pressing the organogel into the microporous surface of the electrode.

Moreover, in a specific embodiment, destruction is performed by high-energy impact that causes the decomposition of the organic part of the organogel, e.g. thermal, induction or infrared heating, or electron or laser beam impact or plasmachemical impact.

Also, in a specific embodiment, organogel destruction is performed with high-rate pyrolysis at temperatures within 800°C in an oxidizing, inert or weakly reducing gas atmosphere.

In specific embodiments, organogel organic part destruction is performed simultaneously or in sequence, by organogel impregnation or deposition to the inner layer surface.

In a specific embodiment, during organogel impregnation of the electrode or organogel deposition to the inner layer surface with simultaneous destruction, the organogel is deposited to the surface to be coated by spraying or printing.

In a specific embodiment, during organogel impregnation of the electrode or organogel deposition to the inner layer surface with subsequent destruction, the organogel is deposited to the cold surface of the electrode or the inner layer with subsequent high-rate heating of the electrode.

In a specific embodiment, organogel impregnation of the electrode or organogel deposition to the inner layer surface and organogel destruction are performed in one or multiple steps.

Said technical result is achieved due to the high rate of material deposition and electrolyte formation on the electrode surface; possibility of using simple and cheap equipment, use of low temperatures, possibility of setting up the technological process in a completely automatic conveyor embodiment; method adaptability with respect to electrolyte composition choice; method adaptability with respect to electrode-electrolyte pair design choice; possibility of taking the properties and parameters of the electrode materials into account.

The organogel used for the fabrication of the electrode-electrolyte pair contains nanosized particles of cerium dioxide with stabilizing additions and an organic solution containing organic salts of cerium and the stabilizing metals, a mixture of α-branching carbonic acids with the general formula H(CH₂-CH₂)ₙCR'R"-COOH, where R' is CH₃, R" is CₘH(ₘ₊₁) and m is from 2 to 6, with an average molecular weight of 140-250.

In a specific embodiment, the stabilizing metals used for the organogel are yttrium and/or alkaline-earth metals and/or rare earth metals and/or bismuth.

Moreover, in a specific embodiment, as the organic solvent, the organogel contains carbonic acid and/or any organic solvent of carbonic acid metal salts.

In a specific embodiment, the organogel contains nanosized particles from 3 to 100 nm.

In specific embodiments, the concentration of stabilizing additions in zirconium and metal salts in the organogel is selected at 0.05 to 1 mole/I in a ratio corresponding to the electrolyte stoichiometric composition.

Specifically, the volume ratio of the nanosized particles in the organogel is within 85%.

The second embodiment of the electrode-electrolyte pair comprises a nanoporous electrode to the surface of which is deposited a layer or dense three-dimensioned electrolyte based on zirconium dioxide with stabilizing additions the grain size of which is within 1000 nm. The electrolyte fills the surface pores of the nanoporous electrode to a depth of 1 - 5 µm.

In a specific embodiment, the electrolyte has an amorphous structure.

In a specific embodiment, as the stabilizing additions, the electrode-electrolyte pair contains yttrium and/or alkaline-earth metals and/or rare earth metals and/or bismuth.

In specific embodiments, the electrode of the pair is anode or cathode with a flat or pipe shape.

The electrode is in a microporous ceramic or metallic or metalloceramic material with pore sizes, at least near the surface, of within 1 µm. In this embodiment of the electrode-electrolyte pair, the electrode may have a functional or technological sublayer on the surface. This sublayer can be in a nanoporous cathodic or anodic material, another electrolyte material or a fine-grained mixture of the electrode and the electrolyte materials.

The electrode-electrolyte pair fabrication method based on cerium dioxide following the second embodiment of the invention comprises the formation, on the microporous electrode surface, of a dense three-dimensional solid electrolyte layer based on cerium dioxide with stabilizing additions. During the formation, the nanoporous electrode surface is initially impregnated with an organic solution containing organic salts of cerium and the stabilizing metals, a mixture of branching carbonic acids with the general formula H(CH₂₋CH₂)ₙCR'R"-COOH, where R' is CH₃, R" is CₘH₍ₘ₊₁₎ and m is from 2 to 6, with an average molecular weight of 140-250. The next step is destruction of the solution organic part that leads to the chemical deposition of the solid electrolyte on the electrode surface.

In specific embodiments, the stabilizing additions for the solid electrolyte according to this method can be yttrium and/or alkaline-earth metals and/or rare earth metals and/or bismuth.

Moreover, in a specific embodiment, as the organic solvent, the solution contains carbonic acid or toluene or octanol or any organic solvent of carbonic acid metal salts.

Moreover, in a specific embodiment, destruction is performed by high-energy impact that causes the decomposition of the organic part of the solution, e.g. thermal, induction or infrared heating, or electron or laser beam impact or plasmachemical impact.

In specific embodiments, solution destruction is performed with high-rate pyrolysis at temperatures within 800°C in an oxidizing, inert or weakly reducing gas atmosphere.

In a specific embodiment, solution organic part destruction is performed simultaneously or in sequence, with impregnation.

Specifically, during electrode impregnation with simultaneous destruction, the solution is deposited to the surface to be coated by spraying or printing.

In a specific embodiment, during electrode impregnation with subsequent destruction, the solution is deposited to the cold surface of the electrode with subsequent high-rate heating of the electrode.

Also, in a specific embodiment, the concentration of stabilizing additions in zirconium and metal salts in the solution is selected at 0.05 to 1 mole/I in a ratio corresponding to the electrolyte stoichiometric composition.

Moreover, in a specific embodiment, solution deposition onto the electrode or destruction are performed in one or multiple steps.

### Brief Description of the Drawings.

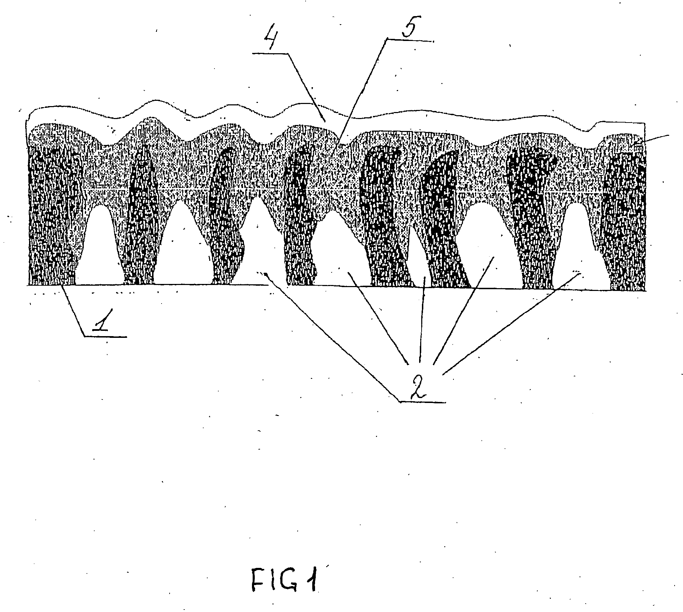

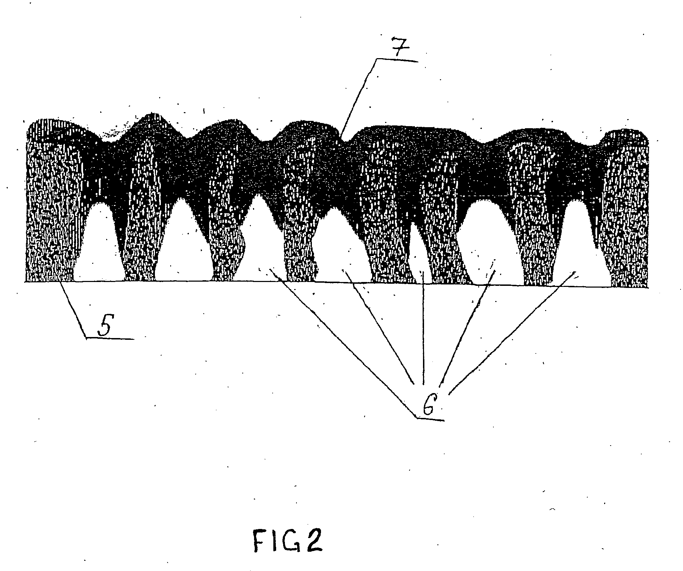

Figure 1 shows schematic of one embodiment of the electrode-electrolyte pair according to the invention. Figure 2 shows schematic of another embodiment of the electrode-electrolyte pair.

### Embodiments of the Invention.

The electrode-electrolyte pair (Fig. 1) comprises a microporous electrode 1 with pores 2, an inner nanoporous three-dimensional solid electrolyte layer 3 and a dense outer solid electrolyte layer 4.

The efficiency of a fuel cell (electrical power generated per unit surface) is determined by the following factors:
■ ionic conductivity of the electrolyte based on cerium dioxide (the higher the conductivity, the greater the power available);
■ electrolyte layer thickness (the greater the thickness, the greater the power);
■ electrical resistivity at the electrode-electrolyte boundary (the lower the resistivity, the greater the power);
■ contact area between the electrode and the electrolyte (the greater the area, the greater the power);
■ electrochemical contact area of the gaseous phase, the electrode and the electrolyte (the greater the electrochemical contact area, the greater the power).

The operation efficiency of the electrode-electrolyte pair is mainly determined by the density of the zirconium dioxide electrolyte layer (absence of through pores and macrocracks) and its ability to resist thermal stresses both during the fabrication and during the operation of the fuel cell. The latter quality of the electrolyte layer material depends on the strength of the material, electrolyte adhesion to the electrode material and the ability of the electrode-electrolyte pair to relieve mechanical stresses without forming cracks, taking into account the role of the surface stress concentrators on the electrode-electrolyte boundary.

Thus, the efficiency of the electrode-electrolyte pair, is determined by the composition of metal-doped cerium dioxide, its mechanical properties under the condition of their maximum matching with the mechanical properties of the electrode and the design of the cerium dioxide layer on the porous electrode surface.

The possibility of achieving the optimum properties and parameters of an electrode-electrolyte pair is determined by its fabrication method.

As the electrolyte material for fuel cells, metal-doped cerium dioxide is used. As the doping metals, yttrium and/or alkaline-earth metals and/or rare-earth metals are used.

Doping allows producing stabilized cerium dioxide having a cubic fluoride structure. Moreover, doping allows producing cerium dioxide of combined conductivity that can be used as a sublayer on the cathode or anode for reducing the electrical resistivity at the electrode-electrolyte boundary.

According to this embodiment of the invention (Fig. 1) electrode 1 can have a flat or pipe shape, act as a cathode or an anode and be made from a ceramic, metallic or metalloceramic material with a pore size of above 1 µm. For example, anode can be made from metals, such as nickel, cobalt or their alloys and stainless steels; metalloceramics, such as NiO(Ni)-stabilized zirconium dioxide, NiO(Ni)-stabilized cerium dioxide, CoO(Co)-stabilized zirconium dioxide or CoO(Co)-stabilized cerium dioxide. A metallic anode can be made from foam metal or a volume mesh. Ceramic cathode can be made from perovskite family ceramics, such as LaMnO₃, LaCoO₃, LaNiO₃, lanthanum gallates and other metal oxides having a good electronic conductivity and catalytic activity to ionize air oxygen. Cathode can be made from metal with a protective oxide coating. Electrode porosity is typically 20 to 80%.

The inner nanoporous three-dimensional layer 3 consisting of stabilized zirconium dioxide penetrates into the porous electrode 1 to a depth of 5 - 50 µm. The stabilizing metals can be yttrium and/or alkaline-earth metals and/or rare earth metals and/or bismuth.

The penetration depth (H) depends on electrode pore diameter (D), typically as H = (2-3) D.

The key problem of thin electrolyte layer efficiency and reliability, however produced, is its defectiveness, i.e. the presence of pores and microcracks, as well as poor adhesion. The main origin of this problem are the high thermal and internal stresses both in the electrolyte itself and on the phase boundary. During electrode deposition onto the porous surface of electrode 1, the surface microroughnesses act as stress concentrators thus leading to crack initiation even at relatively low thermal and internal stresses.

In the invention disclosed herein, of extreme importance is the inner nanoporous three-dimensional electrolyte layer 3 made from stabilized zirconium dioxide. For example, due to the penetration of the layer 3 into the electrode 1, its nanoporousity and the good adhesion to the materials of the electrode 1, the surface stress concentrators are eliminated, the electrode and electrolyte thermal expansion coefficients are matched and the mechanical stresses are relieved. The above effects become even stronger if the inner layer 3 has a porosity gradient, i.e. an increase in porosity from the electrode surface downwards. These factors tangibly increase the reliability and operation efficiency of the electrode-electrolyte pair, primarily expressed in the prevention of cracking and defect formation in the dense layer 4. Moreover, this advantage provides for the minimization of the thickness of the dense layer 4, thus reducing the working temperature of the electrochemical device and an increase in its electrochemical efficiency.

For example, the suggested inner layer 3 consisting of tetragonal cerium dioxide can relieve stresses of up to 500 MPa when in combination with a ceramic electrode and up to 1000 MPa when in combination with a metallic electrode.

The high strength and cracking resistance of the inner layer 3 that are of primary importance for the fabrication of the electrode-electrolyte pair are achieved due to the three dimensions and the specific combined structure consisting of 3 - 1000 nm grains and an amorphous phase.

In the invention disclosed herein, the role of the inner nanoporous three-dimensional layer 3 consisting of stabilized cerium dioxide is important also from the viewpoint of increasing the electrochemical efficiency of the electrode-electrolyte pair. First, this is due to the multiple increase in the area of the electrical contact between the the material of layer 3 and the material of electrode 1. Second, the nanocrystalline layer 3 has a higher conductivity of oxygen ions. For example, the oxygen ion conductivity of a nanocrystalline layer (grain size 10 - 100 nm) of Ce_{0.8}Sm_{0.2}O₂ electrolyte is 2-3 times that of the same composition electrolyte with a grain size of 20 µm.

Third, the nanoporous layer 3 has a high surface ionic and electronic conductivity, especially in a wet gaseous atmosphere at the side of the electrode 1. Fourth, doping of stabilized cerium dioxide that composes the inner layer 3, e.g. with gadolinium, produces a combined type of conductivity in the layer 3 thereby multiply increasing the area of the electrochemical contact between the ionic conductor, the electronic conductor and air oxygen (for cathodic electrode) or the fuel (for anodic electrode).

Thus, the inner layer 3 provides for a high current density, a low level of electrode overstressing and a high specific power of the fuel cell as a whole.

The dense layer 4 of solid electrolyte is a thin two-dimensional layer consisting of cubic cerium dioxide that has a 100% ionic type of conductivity. Stabilizing metals can be calcium, magnesium, yttrium, scandium and aluminum. Due to the layer 4 localization on the surface of the inner nanoporous layer 3 that eliminates the surface stress concentrators and relieves all the technological and thermal stresses, it may be up to 0.5 - 5 µm in thickness. Due to this fact, the ohmic losses in the electrolyte are minor, providing for a high electrochemical efficiency of the electrolyte as is. The amorphous structure of the layer 4 provides for its strength and elasticity that are important at the electrode-electrolyte pair fabrication stage where the reject percentage is known to be the highest. This advantage indirectly reduces the cost of the electrode-electrolyte pair and the electrochemical device as a whole. After the deposition of the electrolyte layer 4 the amorphous structure of zirconium dioxide can be crystallized without the risk of cracking in the layer.

The compositions of the layers 3 and 4 can be similar or different. The composition and properties may exhibit a gradient behavior across the layers 3 and 4. This can be achieved by sequential deposition of the layers 3 and 4 with an appropriate change in the technological conditions and the materials used. This feature broadens the potential capabilities of the pair and its technology. Moreover, where one of the electrolyte layers should have special properties, cerium dioxide can be doped with multiple different metals. For example, additional scandium and aluminum doping of stabilized cerium dioxide increases the strength of the electrolyte as compared with undoped cerium dioxide. Stabilization of cerium dioxide by bismuth doping increases the density and ionic conductivity of the electrolyte. Yttrium-stabilized cerium dioxide after additional strontium doping acquires reduction stability, this significantly increasing the efficiency of the anode-electrolyte pair.

The second electrode-electrolyte pair embodiment (Fig. 2) comprises a nanoporous electrode 5 with pores 6 and a dense three-dimensional solid electrolyte layer 7.

According to this electrode-electrolyte pair embodiment, the electrode 5 can have flat or pipe shape, act as a cathode or an anode and be in ceramic, metallic or metalloceramic materials. A currently generally used embodiment of the electrode 5 is a cathode with a cathodic or electrolyte sublayer or an anode with an anodic or electrolyte sublayer. The pores 6 of the electrode or the sublayer are less than 1 µm in size.

The dense three-dimensional dense electrolyte layer 7 consisting of stabilized cerium dioxide is located on the electrode surface and partially penetrates into the pores 6 to a depth of 1 - 5 µm. The dense electrolyte layer 7 is cubic cerium dioxide stabilized with yttrium or rare-earth metals. Moreover, additional doping of stabilized cerium dioxide with other metals. The layer 7 has an amorphous structure, at least at the deposition stage. This layer has the same functions and the same advantages as the double layer according to the first embodiment of the electrode-electrolyte pair, the only difference being in that for an electrode pore size of less than 1 µm there is no need to deposit a nanoporous inner electrolyte layer.

The first embodiment of the electrode-electrolyte pair suggested and disclosed herein (Fig. 1) is fabricated using the first suggested fabrication method and the suggested organogel.

The organogel is a metalorganic liquid consisting of an organic solution of cerium and alloying metal organic salts with an addition of nanosize particles of stabilized cerium dioxide. The organic basis of the metal salts is a mixture of α-branching carbonic acids with the general formula H(CH₂-CH₂)ₙCR'R"-COOH, where R' is CH₃, R" is CₘH₍ₘ₊₁₎ and m is from 2 to 6, with an average molecular weight of 140-250. The organic salt solvent is carbonic acid and/or any other organic solvent of carbonic acids, e.g. toluene, octanol etc. The main function of the solvent is to adjust the viscosity of the organogel.

The salts of cerium and alloying metals, such as yttrium, rare-earth metals, bismuth, aluminum, alkaline and alkaline-earth metals, are obtained by extraction from water solutions of appropriate metal salts to a mixture of carbonic acid, following which the metal carboxylates are mixed in the proportion as is required for the production of the final electrolyte stoichiometric composition. The concentration of each metallic element in the carboxylates may vary from 0.05 to 1.0 mole/l.

The material of the nanosized particles is stabilized and/or doped cerium dioxide. The size of the nanoparticles corresponding to the electrolyte composition or part of the electrolyte composition is 3 to 100 nm. The volume ratio of the particles in the organogel may reach 85% of the total organic liquid volume. The volume ratio of the particles in the organogel controls the organogel viscosity and the density of the electrolyte layer deposited. The higher the particles content, the higher the organogel viscosity and the nanoporosity of the electrolyte layer deposited. The rule for determining the optimum volume ratio of the particles in the organogel is as follows: the greater the electrode pore size, the greater the volume ratio of the particles. Organogel is produced by mechanically mixing the particles and the organic liquid.

The electrolyte layer production method is based on destruction (decomposition) of the organogel organic component deposited on the electrode surface. An oxide layer forms on the surface, composed of the particles and oxides of the metals chemically deposited from appropriate metal carboxylates in the organogel composition. Oxides of metals deposited from carboxylates cement the particles between themselves to form a monolithic structure. Unlike other solution deposition methods that produce metal oxide powders on the surface that need high-temperature sintering, the method disclosed herein allows direct production of a compact electrolyte layer at low temperatures, this being a fundamental distinctive feature of the method.

The difference is attributed to the property of metal oxides deposited from carboxylates to have an amorphous structure during destruction. An amorphous structure is a solid counterpart of liquids, and, by analogy with liquid electrolytes, it has the following advantages:
■ it provides for the greatest possible area of electrochemical contact between the zirconium dioxide deposited electrolyte and the electrode materials;
■ it inherits the microroughnesses of the electrode surfaces, including the surface of their open pores;
■ it covers the open pores and microcracks on the surface of electrodes.

Moreover, sequential transition from the liquid state of the organogel to a crystalline zirconium oxide structure through an intermediate amorphous state allows optimizing some useful properties of the electrolyte, such as adhesion, internal stresses and diffusion interaction at phase boundaries.

Stages of electrolyte formation on a microporous surface are as follows.

The first stage is deposition of the organogel onto the surface of the porous electrode using any known method. During the synthesis of the inner nanoporous three-dimensional electrolyte layer, the deposition includes impregnation of the surface pores of the electrodes with the organogel. The impregnation is performed by mechanical pressing of the organogel into the porous surface of the electrode, e.g. with a paint roller, or by vacuum impregnation. Vacuum impregnation is preferably used for small pore electrodes. For the production of the dense outer electrolyte layer, the organogel is deposited by spraying or printing.

The second stage is destruction (decomposition) to produce an electrolyte layer on the surface and remove the organic components in a gaseous state.

The two above process stages can be unified by depositing the organogel onto the heated electrode surface by spraying or printing, provided the surface temperature is sufficient for destruction.

The electrolyte layer can be synthesized using any process that causes destruction of the organic part of the organogel, e.g. thermal, induction or infrared heating, or electron or laser beam impact or plasmachemical impact.

The simplest and cheapest method from the technological and economical viewpoints is thermal destruction (pyrolysis). The destruction onset temperature for the organogel is about 200 °C. The process can be conducted under atmospheric pressure in air or in an inert or weakly reducing gas atmosphere. The temperature and the gas atmosphere determine the destruction rate and hence electrolyte properties. Stabilization of the intermediate amorphous state is preferably performed in an inert or weakly reducing gas atmosphere or using high-rate destruction methods. The minimum electrolyte layer formation time is 30 seconds.

For example, an electrolyte layer can be synthesized by heating the electrode in an inert or weakly reducing gas atmosphere to within 800 °C and depositing the organogel onto the surface by spraying. High-temperature impregnation of the electrode surface pores occurs immediately upon the incidence of the organogel onto the surface. During destruction, the organic part of the organogel decomposes to volatile components, whereas the surface, including the surface pores, becomes covered with oxides that form the electrolyte layer. During the second deposition of the organogel the electrolyte layer forms on the surface of the first deposited layer. The density and properties of the outer electrolyte layer are determined by the organogel composition and properties.

Organogel can be deposited onto the cold electrode surface for further destruction. For thermal destruction, the temperature should also be within 800 °C.

The final synthesis of crystalline electrolyte from the already formed amorphous material layer implies final air heat treatment. Preferably, the heat treatment temperature should not exceed the working temperature of the electrochemical device by more than 10 - 15%.

Organogel properties, such as particle composition, metal composition and concentrations in the organic salt mixture, and the volume ratios of the particles and the carboxylate solution are chosen depending on the final electrolyte composition, thickness, substrate surface properties etc.. These organogel properties allow controlling all the electrolyte parameters with due regard to the substrate surface properties.

The method allows producing electrolyte films on substrates of any materials, shapes and sizes.

The method is very efficient and cost-effective.

The method is easily adaptable to complete automation and conveyor fabrication setup.

The low electrolyte layer synthesis temperatures provide for yet another fundamental advantage in comparison with the other known methods. This advantage is the absence of chemical interaction between the electrolyte and the electrode materials. This results in the absence of highly electrically resistant oxides on the phase boundary and hence provides for a significant increase in current density and specific power of the fuel cell.

Below, the possibilities of the first electrode-electrolyte pair embodiment fabrication method (Fig. 1) and the organogel for this method will be illustrated with specific examples that do not limit the scope of this invention.

### Example 1.

Organogel for the production of electrolyte of the CeO₂ - Sm₂O₃ system, e.g., (CeO₂)_{0.8} (SmO_{1.5})_{0.2}.

Example 1.1. Ce and Sm carboxylates with concentrations of 1.0-1.5 mole/l are produced by extraction of water salts of cerium and samarium to a mixture of acids with the general formula H(CH₂-CH₂)ₙCR'R"-COOH, where R' is CH₃, R" is CₘH₍ₘ₊₁₎ and m is from 2 to 6, with an average molecular weight of 140-250. The excess quantity of carbonic acids act as solvent. Ce and Sm carboxylates are mixed in proportions corresponding to the stoichiometric composition of the (CeO₂)_{0.8} (SmO_{1.5})_{0.2} electrolyte.

The carboxylate solution is mixed with 3 - 100 nm sized nanometric particles with the (CeO₂)_{0.8} (SmO_{1.5})_{0.2} composition. The volume ratio of the nanometric particles is 85% of the organic liquid volume.

Organogel according to Example 1.1 is used for the production of the inner nanoporous three-dimensional (CeO₂)_{0.8} (SmO_{1.5})_{0.2} composition electrolyte layer on metallic, metalloceramic or ceramic electrodes with pore sizes from 5 to 30 µm and penetration depth into the electrode of 10 to 60 µm, respectively.

Example 1.2. Solution of Ce and Sm carboxylates with concentrations of 1.0-1.5 mole/I as in Example 1.1 is produced. Ce and Sm carboxylates are mixed in proportions corresponding to the stoichiometric composition of the (CeO₂)_{0.8} (SmO_{1.5})_{0.2} electrolyte. The carboxylate solution is mixed with 3 - 100 nm sized nanometric particles with the (ceO₂)_{0.8} (SmO_{1.5})_{0.2} composition. The volume ratio of the nanometric particles is 5 - 20% of the organic liquid volume.

Organogel according to Example 1.2 is used for the production of the dense outer (CeO₂)_{0.8} (SmO_{1.5})_{0.2} composition electrolyte layer on the surface of the inner nanoporous three-dimensional electrolyte layer based on doped cerium dioxide or on the surface of any other sublayer.

Example 1.3. Solution of Ce and Sm carboxylates with concentrations of 0.05 mole/l corresponding to the stoichiometric composition of the (CeO₂)_{0.8} (SmO_{1.5})_{0.2} electrolyte as in Example 1.1 is produced.

The carboxylate solution corresponding to the (CeO₂)_{0.8} (SmO_{1.5})_{0.2} composition is mixed with 3 - 100 nm sized nanometric particles with the (CeO₂)_{0.8} (SmO_{1.5})_{0.2} composition. The volume ratio of the nanometric particles is 5 - 20% of the organic liquid volume.

Organogel according to Example 1.3 is used for the production of the inner nanoporous three-dimensional (CeO₂)_{0.8} (SmO_{1.5})_{0.2} composition electrolyte layer on metallic, metalloceramic or ceramic electrodes with pore sizes from 1 to 5 µm and penetration depth into the electrode of 3 to 15 µm, respectively.

Example 1.4. Solution of Ce and Sm carboxylates with concentrations of 0.05 mole/l as in Example 1.1 corresponding to the (CeO₂)_{0.8} (SmO_{1.5})_{0.2} composition is produced.

The carboxylate solution corresponding to the (CeO₂)_{0.8} (SmO_{1.5})_{0.2} composition is mixed with 3 - 100 nm sized nanometric particles with the (CeO₂)_{0.8} (SmO_{1.5})_{0.2} composition, respectively. The volume ratio of the nanometric particles is 1 to 10% of the organic liquid volume.

Organogel according to Example 1.4 is used for the production of the dense outer (CeO₂)_{0.8} (SmO_{1.5})_{0.2} composition electrolyte layer on the surface of the inner nanoporous three-dimensional electrolyte layer based on doped cerium dioxide or on the surface of any other sublayer.

### Example 2.

Organogel for the production of electrolyte of the CeO₂ - Gd₂O₃, e.g., (CeO₂)_{0.8} (GdO_{1.5})_{0.2} systems.

Example 2.1. Ce and Gd carboxylates with concentrations of 0.5-1.5 mole/l are produced by extraction of water salts of cerium and samarium to a mixture of carbonic acids with the general formula H(CH₂-CH₂)ₙCR'R"-COOH, where R' is CH₃, R" is CₘH₍ₘ₊₁₎ and m is from 2 to 6, with an average molecular weight of 140-250. The excess quantity of carbonic acids act as solvent. Ce and Gd carboxylates are mixed in proportions corresponding to the stoichiometric composition of the (CeO₂)_{0.8} (GdO_{1.5})_{0.2} electrolyte.

The carboxylate solution is mixed with 3 - 100 nm sized nanometric particles with the (CeO₂)_{0.8} (GdO_{1.5})_{0.2} composition. The volume ratio of the nanometric particles is 40 - 60% of the organic liquid volume.

Organogel according to Example 2.1 is used for the production of the inner nanoporous three-dimensional (CeO₂)_{0.8} (GdO_{1.5})_{0.2} composition electrolyte layer on metallic, metalloceramic or ceramic electrodes with pore sizes from 3 to 10 µm and penetration depth into the electrode of 6 to 20 µm, respectively.

Example 2.2. Solution of Ce and Gd carboxylates with concentrations of 0.5-1.5 mole/I as in Example 2.1 is produced.

The carboxylate solution is mixed with 3 - 100 nm sized nanometric particles with the (CeO₂)_{0.8} (GdO_{1.5})_{0.2} composition.

The volume ratio of the nanometric particles is 1 - 20% of the organic liquid volume.

Organogel according to Example 2.2 is used for the production of the dense outer (CeO₂)_{0.8} (GdO_{1.5})_{0.2} composition electrolyte layer on the surface of the inner nanoporous three-dimensional electrolyte layer based on doped cerium dioxide or on the surface of any other sublayer.

### Example 3.

Organogel for the production of electrolyte of the CeO₂ - Y₂O₃, e.g., (CeO₂)_{0.8} (YO_{1.5})_{0.2} systems.

Example 3.1. Ce and Y carboxylates with concentrations of 1.5 mole/l are produced by extraction of water salts of cerium and yttrium to a mixture of carbonic acids with the general formula H(CH₂-CH₂)ₙCR'R"-COOH, where R' is CH₃, R" is CₘH₍ₘ₊₁₎ and m is from 2 to 6, with an average molecular weight of 140-250. The excess quantity of carbonic acids act as solvent. Ce and Y carboxylates are mixed in proportions corresponding to the stoichiometric composition of the (CeO₂)_{0.8} (YO_{1.5})_{0.2} electrolyte.

The carboxylate solution is mixed with 3 - 100 nm sized nanometric particles with the (CeO₂)_{0.8} (YO_{1.5})_{0.2} composition. The volume ratio of the nanometric particles is 50 - 85% of the organic liquid volume.

Organogel according to Example 3.1 is used preferably for the production of the inner nanoporous three-dimensional (CeO₂)_{0.8} (YO_{1.5})_{0.2} composition electrolyte layer on metallic, metalloceramic or ceramic electrodes with pore sizes from 5 to 30 µm and penetration depth into the electrode of 10 to 60 µm, respectively.

Example 3.2. Solution of Ce and Y carboxylates with concentrations of 0.05-0.5 mole/l as in Example 3.1 is produced. Ce and Y carboxylates are mixed in proportions corresponding to the stoichiometric composition of the (CeO₂)_{0.8} (YO_{1.5})_{0.2} electrolyte.

The carboxylate solution is mixed with 3 - 100 nm sized nanometric particles with the (CeO₂)_{0.8} (YO_{1.5})_{0.2} composition.

The volume ratio of the nanometric particles is 5 - 25% of the organic liquid volume.

Organogel according to Example 3.2 is used preferably for the production of the dense outer (CeO₂)_{0.8} (YO_{1.5})_{0.2} composition electrolyte layer on the surface of the inner nanoporous three-dimensional electrolyte layer based on doped cerium dioxide or on the surface of any other sublayer.

### Example 4.

Organogel for the production of electrolyte of the [(Y_{0.5}Sr_{0.5})_{0.4}Ce_{0.6}]Oₓ composition.

Example 4.1. Ce, Sr and Y carboxylates with concentrations of 0.5-1.5 mole/I are produced by extraction of water salts of cerium, strontium and yttrium to a mixture of carbonic acids with the general formula H(CH₂-CH₂)ₙCR'R"-COOH, where R' is CH₃, R" is CₘH₍ₘ₊₁₎ and m is from 2 to 6, with an average molecular weight of 140-250. The excess quantity of carbonic acids act as solvent. Ce, Sr and Y carboxylates are mixed in proportions corresponding to the stoichiometric composition of the [(Y_{0.5}Sr_{0.5})_{0.4}Ce_{0.6}]Oₓ electrolyte.

The carboxylate solution is mixed with 3 - 100 nm sized nanometric particles with the [(Y_{0.5}Sr_{0.5})_{0.4}Ce_{0.6}]Oₓ composition. The volume ratio of the nanometric particles is 50 - 85% of the organic liquid volume.

Organogel according to Example 4.1 is used preferably for the production of the inner nanoporous three-dimensional [(Y_{0.5}Sr_{0.5})_{0.4}Ce_{0.6}]Oₓ composition electrolyte layer on metallic, metalloceramic or ceramic electrodes with pore sizes of above 1 µm.

Example 4.2. Ce, Sr and Y carboxylates with concentrations of 0.05-1.5 mole/I are produced by extraction of water salts of cerium, strontium and yttrium to a mixture of carbonic acids with the general formula H(CH₂-CH₂)ₙCR'R"-COOH, where R' is CH₃, R" is CₘH₍ₘ₊₁₎ and m is from 2 to 6, with an average molecular weight of 140-250. The excess quantity of carbonic acids act as solvent. Ce, Sr and Y carboxylates are mixed in proportions corresponding to the stoichiometric composition of the [(Y_{0.5}Sr_{0.5})_{0.4}Ce_{0.6}]Oₓ electrolyte.

The carboxylate solution is mixed with 3 - 100 nm sized nanometric particles with the [(Y_{0.5}Sr_{0.5})_{0.4}Ce_{0.6}]Oₓ composition.

The volume ratio of the nanometric particles is 5 - 50% of the organic liquid volume.

Organogel according to Example 4.2 is used preferably for the production of the dense outer [(Y_{0.5}Sr_{0.5})_{0.4}Ce_{0.6]}Oₓ composition electrolyte layer on the surface of the inner [(Y_{0.5}Sr_{0.5})_{0.4}Ce_{0.6}]Oₓ layer or on the surface of any other sublayer.

### Example 5.

Organogel for the production of electrolyte of the Ce-Bi-Ox system composition, e.g. Ce_{0.6} Bi_{0.4} O₂.

Example 5.1. Ce and Bi carboxylates with concentrations of 0.05-1.5 mole/l are produced by extraction of water salts of cerium and bismuth to a mixture of carbonic acids with the general formula H(CH₂-CH₂)ₙCR'R"-COOH, where R' is CH₃, R" is CₘH₍ₘ₊₁₎ and m is from 2 to 6, with an average molecular weight of 140-250. The excess quantity of carbonic acids act as solvent. Ce and Bi carboxylates are mixed in proportions corresponding to the stoichiometric composition of the Ce_{0.6} Bi_{0.4} O₂ electrolyte.

The solution is mixed with 3 - 100 nm sized nanometric particles with the Ce_{0.6} Bi_{0.4} O₂ composition.

The volume ratio of the nanometric particles is 50 - 85% of the organic liquid volume.

Organogel according to Example 5.1 is used preferably for the production of the inner nanoporous three-dimensional Ce_{0.6} Bi_{0.4} O₂ composition electrolyte layer on metallic, metalloceramic or ceramic electrodes with pore sizes of above 1 µm.

Example 5.2. Ce and Bi carboxylates with concentrations of 0.05-1.5 mole/l are produced by extraction of water salts of cerium and bismuth to a mixture of carbonic acids with the general formula H(CH₂-CH₂)ₙCR'R"-COOH, where R' is CH₃, R" is CₘH₍ₘ₊₁₎ and m is from 2 to 6, with an average molecular weight of 140-250. The excess quantity of carbonic acids act as solvent. Ce and Bi carboxylates are mixed in proportions corresponding to the stoichiometric composition of the Ce_{0.6} Bi_{0.4} O₂ electrolyte.

The solution is mixed with 3 - 100 nm sized nanometric particles with the Ce_{0.6} Bi_{0.4} O₂ composition.

The volume ratio of the nanometric particles is 5 - 50% of the organic liquid volume.

Organogel according to Example 5.2 is used preferably for the production of the dense outer Ce_{0.6} Bi_{0.4} O₂ composition electrolyte layer on the surface of the inner Ce_{0.6} Bi_{0.4} O₂ layer or on the surface of any other sublayer.

### Example 6.

Method of fabricating an electrode-electrolyte pair comprising a microporous electrode and a two-layered electrolyte based on cerium dioxide.

The electrode materials for this example can be as follows:
- ceramic cathode, e.g. of the perovskites group of the manganites, cobaltites, nickelites, chromites etc. family;
- metallic cathode made from, e.g. ferritic steel;
- metalloceramic anode, e.g. of the Ni - CeO₂, Co - CeO₂, Cu - CeO₂ etc. system;
- metallic anode made from foam metal or volume mesh consisting of nickel, cobalt or their alloys.

The electrode shape is flat or pipe-like. The electrode may have well-developed surface roughness, porosity of 30 to 70% and pore size of 1 to 30 µm.

Example 6.1. Method of fabricating a pair of a La₁₋ₓ Srₓ Co O₃ cathode and a two-layered (CeO₂)_{0.8} (SmO_{1.5})_{0.2} (SDC) based electrolyte.

The cathode has a porosity of 30% and an average pore size of 5 µm.

The electrolyte is produced by thermal destruction. The deposition is performed in at least two stages.

At the first stage, the inner nanoporous three-dimensional SDC electrolyte layer is produced, primarily in the electrode surface pores. The function of the inner SDC electrolyte layer is as follows:
1. transformation of large cathode surface pores to a nanoporous material corresponding to the SDC electrolyte composition;
2. relieving of the internal and thermal stresses at the phase boundary of the two contacting materials and in the electrode material layer towards the electrolyte;
3. elimination of the negative effect of surface stress concentrators in the electrode material;
4. maximizing the electrochemical contact area with the electrolyte at the electrolyte side.

The inner SDC electrolyte layer is obtained using the organogel according to Examples 1.1 or 1.3.

The organogel is deposited onto the cold surface with a roller by pressing it into the electrode surface pores or by one-side vacuum impregnation of the porous electrode. Destruction is performed by heating the electrode to 500 - 800 °C in an argon atmosphere or in an argon and hydrogen mixture at reference pressure. Destruction produces, on the heated electrode surface, a partially amorphous three-dimensional layer of nanoporous SDC electrolyte penetrating into the electrode pores to 10 - 15 µm. Electrolyte properties are stabilized by crystallization annealing at 600 - 1100 °C exceeding the working temperature of the electrochemical device by at least 15%, the electrolyte grain size being 20 - 1000 nm.

At the second stage, a dense two-dimensional SDC electrolyte layer is produced on the surface of the preliminarily synthesized SDC electrolyte sublayer.

This is performed using the organogel according to Examples 1.2 or 1.4. The organogel is deposited onto the cold functional sublayer surface with subsequent heating to 500 - 800 °C in an argon atmosphere or in an argon and hydrogen mixture or onto the sublayer surface heated to 500 - 800 °C in a similar atmosphere. The final treatment is in air at 600 - 1100 °C exceeding the working temperature of the electrochemical device by at least 15%. As a result, a dense, defect- and crack-free two-dimensional 8YSZ electrolyte layer with a grain size of 20 - 1000 nm forms on the sublayer surface. The thickness of this latter layer is 3 - 10 µm.

Organogel according to Example 1.4 can be deposited onto the sublayer surface heated to 200 - 500 °C in air or in an inert atmosphere. Destruction produces dense, defect- and crack-free two-dimensional SDC electrolyte layer on the sublayer surface. The final treatment is in air at 800 - 1100 °C exceeding the working temperature of the electrochemical device by at least 15%. As a result, a dense, defect- and crack-free two-dimensional SDC electrolyte layer with a grain size of 20 - 1000 nm forms on the sublayer surface. The thickness of this latter layer is 1 - 5 µm.

The electrolyte produced as above was a continuous layer part of which, i.e. the three-dimensional nanoporous electrolyte, penetrated into the porous electrode structure, and the other part, i.e. the dense two-dimensional layer was uniformly distributed over the surface and inherited its roughness pattern.

Example 6.2. Method of fabricating a pair of a La₁₋ₓ Srₓ Co O₃ cathode and a two-layered electrolyte based on cerium dioxide of different compositions.

The cathode has a porosity of 30% and an average pore size of 5 µm.

The electrolyte is produced by thermal destruction. The deposition is performed in at least two stages.

At the first stage, the inner nanoporous three-dimensional (CeO₂)_{0.8} (GdO_{1.5})_{0.2} (GDC) electrolyte layer having a combined ionic and electronic p-type of conductivity is produced. The function of the inner (CeO₂)_{0.8} (GdO_{1.5})_{0.2} electrolyte layer is as follows:
1. transformation of large cathode surface pores to a nanoporous material corresponding to the (CeO₂)_{0.8} (GdO_{1.5})_{0.2} electrolyte composition;
2. relieving of the internal and thermal stresses at the phase boundary of the two contacting materials and in the electrode material layer towards the electrolyte;
3. elimination of the negative effect of surface stress concentrators in the electrode material;
4. maximizing the electrochemical contact area with the electrolyte at the electrode side;
5. maximizing the electrochemical contact area with the electrolyte at the electrolyte side;
6. minimization of the cathode resistance.

The inner (CeO₂)_{0.8} (GdO_{1.5})_{0.2} electrolyte layer is produced using the organogel according to Example 2.1.

The inner layer production method is as in Example 6.1.

At the second stage, a dense two-dimensional CeO₂ - Sm₂O₃ (SDC) or CeO₂ - Y₂O₃ (YDC) electrolyte layer is produced on the surface of the preliminarily synthesized (CeO₂)_{0.8} (GdO_{1.5})_{0.2} electrolyte sublayer.

This is performed using the organogel according to Examples 1.2 or 1.4 for SDC or organogel according to Example 3.2 for YDC. The dense outer layer production method is as in Example 6.1.

The electrolyte produced as above was a continuous layer part of which, i.e. the three-dimensional nanoporous electrolyte of the GDC composition, penetrated into the porous electrode structure, and the surface layer, i.e. the dense two-dimensional SDC or YDC layer was uniformly distributed over the surface and inherited its roughness pattern.

Example 6.3. Method of fabricating a pair of a 50% CoO - 50% GDC anode and a two-layered electrolyte based on cerium dioxide of different compositions.

The cathode has a porosity of 30% and an average pore size of 3 µm.

The electrolyte is produced by thermal destruction. The deposition is performed in at least two stages.

At the first stage, the inner nanoporous three-dimensional GDC electrolyte layer having a combined ionic and electronic p-type of conductivity is produced. The function of the inner GDC electrolyte layer is as follows:
1. transformation of large cathode surface pores to a nanoporous material corresponding to the GDC electrolyte composition;
2. relieving of the internal and thermal stresses at the phase boundary of the two contacting materials and in the anode material layer towards the electrolyte;
3. elimination of the negative effect of surface stress concentrators in the anode material;
4. maximizing the electrochemical contact area with the electrolyte at the anode side;
5. maximizing the electrochemical contact area between the gaseous fuel, the anode material and the electrolyte;
6. minimization of the anode resistance.

The inner GDC electrolyte layer is produced using the organogel according to Example 2.1.

The inner layer production method is as in Example 6.1.

At the second stage, a dense two-dimensional SDC electrolyte layer is produced on the surface of the preliminarily synthesized GDC electrolyte sublayer.

This is performed using the organogel according to Example 1.4. The dense outer layer production method is as in Example 6.1.

The electrolyte produced as above was a continuous layer part of which, i.e. the three-dimensional nanoporous electrolyte of the GDC composition with a combined type of conductivity, penetrated into the porous electrode structure to 6 - 8 µm, and the surface layer, i.e. the dense two-dimensional SDC layer was uniformly distributed over the surface and inherited its roughness pattern.

Example 6.4. Method of fabricating a pair of a (steel, nickel, cobalt or their alloy) anode and a two-layered electrolyte based on cerium dioxide.

The metallic anode is a foam metal or a volume mesh and has a porosity of 30 - 60% and an average pore size of 10 - 50 µm.

The electrolyte is produced by thermal destruction. The deposition is performed in at least two stages.

At the first stage, the inner nanoporous three-dimensional [(Y_{0.5}Sr_{0.5})_{0.4}Ce_{0.6}]Oₓ electrolyte layer having a high stability against reduction in a gaseous fuel atmosphere, is produced. This is performed using the organogel according to Example 1.4. The inner electrolyte layer production method and functions are as in Example 6.1.

At the second stage, a dense two-dimensional [(Y_{0.5}Sr_{0.5})_{0.4}Ce_{0.6}]Oₓ electrolyte layer is produced on the surface of the preliminarily synthesized sublayer.

This is performed using the organogel according to Example 4.2. The dense outer layer production method is as in Example 6.1.

The electrolyte produced as above was a continuous layer part of which, i.e. the three-dimensional nanoporous electrolyte of the [(Y_{0.5}Sr_{0.5})_{0.4}Ce_{0.6}]Oₓ composition, penetrated into the porous electrode structure to 20 - 100 µm, and the surface layer, i.e. the dense two-dimensional [(Y_{0.5}Sr_{0.5})_{0.4}Ce_{0.6}]Oₓ layer was uniformly distributed over the surface and inherited its roughness pattern.

Example 6.45. Method of fabricating a pair of a (steel, nickel, cobalt or their alloy) cathode and a two-layered electrolyte based on cerium dioxide.

The metallic anode is a foam metal or a volume mesh and has a porosity of 30 - 60% and an average pore size of 10 - 50 µm.

The electrolyte is produced by thermal destruction. The deposition is performed in at least two stages.

At the first stage, the inner nanoporous three-dimensional Ce_{0.6}Bi_{0.4}O₂ electrolyte layer having a high stability against reduction in a gaseous fuel atmosphere, is produced. This is performed using the organogel according to Example 5.1. The inner electrolyte layer production method and functions are as in Example 6.1.

At the second stage, a dense two-dimensional electrolyte layer based on cerium dioxide is produced as in Examples 6.1-6.4.

The second embodiment of the electrode-electrolyte pair suggested and disclosed herein (Fig. 2) is fabricated using the second suggested fabrication method.

The electrolyte production method is based on destruction (decomposition) of the organic component of the organic solution of cerium and stabilizing metal salts deposited onto the electrode surface. The organic salts are carboxylates of cerium, yttrium, alkaline, alkaline-earth and rare-earth metals in a mixture of α-branching carbonic acids with the general formula H(CH₂-CH₂)ₙCR'R"-COOH, where R' is CH₃, R" is CₘH₍ₘ₊₁₎ and m is from 2 to 6, with an average molecular weight of 140-250. The organic salt solvent is any carbonic acids, e.g. toluene, octanol or other organic solvent.

As a result of the destruction, an amorphous oxide layer forms on the surface, the composition of which corresponds to that of stabilized cerium oxide. Unlike other solution deposition methods that produce metal oxide powders on the surface that need high-temperature sintering, the method disclosed herein allows direct production of a dense and defect-free electrolyte layer at low temperatures, this being a fundamental distinctive feature of the method.

The first stage is deposition of the solution onto the surface of the porous electrode using any known method, preferably, spraying or printing. Due to the high liquidity and wetting capacity of the solution, impregnation of the surface pores sized less than 1 µm to a depth of 1 - 5 µm occur automatically and does not requires any special methods.

The second stage is destruction (decomposition) to produce a dense electrolyte layer on the surface and remove the organic components in a gaseous state.

The two above process stages can be unified by depositing the solution onto the heated electrode surface, provided the surface temperature is sufficient for destruction.

The electrolyte layer can be synthesized using any process that causes destruction of the organic part of the solution, e.g. thermal, induction or infrared heating, or electron or laser beam impact or plasmachemical impact.

The simplest and cheapest method from the technological and economical viewpoints is thermal destruction (pyrolysis). The destruction temperature is within 800 °C, the preferable thermal destruction temperature range being 200 - 600 °C. The process can be conducted under atmospheric pressure in air or in an inert or weakly reducing gas atmosphere. The temperature and the gas atmosphere determine the destruction rate and hence electrolyte properties. Stabilization of the intermediate amorphous state is preferably performed in an inert or weakly reducing gas atmosphere or using high-rate destruction methods. The minimum electrolyte layer formation time is 30 seconds. Destruction in air increases the oxide layer formation rate, the minimum electrolyte layer formation time in this case being 5 - 10 seconds.

The method of solution deposition onto the heated surface with simultaneous destruction is more rapid and efficient, but it leads to elevated stresses in the electrolyte layer and at the phase boundary.

The method of solution deposition onto the cold surface with subsequent destruction is less efficient, but it reduces the stress level in the layer and produces a layer that is more uniform across its thickness which is important, e.g. for the fabrication of an electrode-electrolyte pair having a high surface area. Moreover, this method is preferable for multiple electrolyte layer deposition to exclude electrolyte layer rejects as multiple layer deposition heals possible defects.

The final synthesis of crystalline electrolyte from the already formed amorphous material layer implies final air heat treatment. Preferably, the heat treatment temperature should not exceed the working temperature of the electrochemical device by more than 10 - 15%.

The distinctive feature of this method is the possibility of producing thin defect-free cerium dioxide electrolyte layers composing an electrode-electrolyte layer with two-layered electrolyte, e.g. , ZrO₂/CeO₂, BiO₂/CeO₂ or La(Sr)Ga(Mg)O₃/ CeO₂. This reduces the working temperature of the fuel cells and increases their efficiency, this being an urgent problem today.

The choice of the solution deposition and destruction method and gas atmosphere composition provide for the high adaptability of the method and allow producing high-quality electrode-electrolyte pairs with due regard to the properties and parameters of the composing materials.

Below, the possibilities of the second electrode-electrolyte pair fabrication method will be illustrated with specific examples that do not limit the scope of this invention.

### Example 7.

Method of fabricating an electrode-electrolyte pair comprising a nanoporous electrode (sublayer) and a dense thin electrolyte based on cerium dioxide.

The electrode or electrode sublayer materials for this example can be as follows:
- ceramic cathode, e.g. of the perovskites group of the manganites, cobaltites, nickelites, chromites etc. family;
- metallic cathode made from, e.g. ferritic steel with a functional cathodic sublayer;
- metalloceramic anode, e.g. of the Ni - GDC, Co - GDC etc. system;
- metallic anode made from foam metal or volume mesh consisting of nickel, cobalt or their alloys with an anode sublayer;
- electrode with other electrolyte on the surface.

The electrode shape is flat or pipe-like. The electrode (sublayer) may have well-developed surface roughness, porosity of 0 to 60% and a pore size of less than 1 µm.

Example 7.1. Method of fabricating a pair of a 50% NiO - 50% 3YSZ anode with a 50% NiO - 50% GDC sublayer and a dense SDC electrolyte layer.

The cathode has a porosity of 35% and an average pore size of less than 1 µm. The sublayer thickness is 10 µm.

The electrolyte is produced by thermal destruction. The deposition is performed in at least one stage.

The dense SDC electrolyte layer is produced using a solution of a mixture of cerium and samarium carboxylates in toluene with a total cerium and samarium concentration of 0.5 mole/l, their molar ratio corresponding to the SDC electrolyte stoichiometric composition.

The solution is deposited onto the cold surface by printing, following which the anode is air heated at atmospheric pressure to 300 °C. Under these conditions, the anode sublayer surface pores are impregnated to a depth of 3 - 5 µm. Destruction of the organic part of the solution produces a dense amorphous surface SDC layer penetrating into the sublayer to 3 - 5 µm, the layer thickness on the surface being less than 1 µm. If the SDC layer thickness should be increased, the deposition and destruction cycle is repeated.

The final annealing at 600 and 1000 °C produces cubic fluoride cerium dioxide with a density of 99.8% of the theoretical one and a grain size of 30 - 40 and 800 - 1000 nm, respectively.

Example 7.2. Method of fabricating a pair of a metallic anode with a nanoporous scandium stabilized 50% CoO - 50% GDC sublayer and a dense SDC electrolyte layer.

The cathode has a porosity of 30% and an average pore size of less than 1 µm. The sublayer thickness is 25 µm.

The electrolyte is produced by solution deposition with simultaneous thermal destruction.

The dense SDC electrolyte sublayer is produced using a solution of a mixture of cerium and samarium carboxylates as in Example 7.1, the total cerium and samarium concentration being 0.05 - 0.5 mole/I, and their ratio being stoichiometric.

The solution is deposited onto the surface heated to 400 °C by multiple printing at atmospheric pressure in an argon atmosphere. Under these conditions (during the first deposition cycle), the anode sublayer surface pores are impregnated to a depth of 1 - 2 µm with further increase of the SDC electrolyte layer. Each cycle is 1 minute long.

This technology produces a dense amorphous surface SDC layer penetrating into the sublayer to 1 - 2 µm, the layer thickness on the surface being 0.5 to 5 µm.

The final annealing at 800 °C produces cubic cerium dioxide with a density of 99.5% of the theoretical one and a grain size of 20 - 50 nm.

Example 7.3. Method of fabricating a pair of a La _{0.6} Sr _{0.4}CoO₃ cathode with a La _{0.6} Sr _{0.4}CoO₃ sublayer and a dense bismuth stabilized cerium dioxide (BSC) electrolyte layer.

The cathode has a porosity of 35% and an average pore size of less than 1 µm. The sublayer thickness is 5 µm.

The electrolyte is produced by thermal destruction. The deposition is performed in at least one stage.

The dense BSC electrolyte layer is produced using a solution of a mixture of cerium and bismuth carboxylates in toluene with a total cerium and bismuth concentration of 0.7 and 1.2 mole/l, respectively, their molar ratio corresponding to the BSC electrolyte stoichiometric composition.

The solution is deposited onto the cold surface by spraying, following which the cathode is air heated at atmospheric pressure to 300 °C. Under these conditions, the cathode sublayer surface pores are impregnated to a depth of up to 5 µm. Destruction of the organic part of the solution produces a dense amorphous surface BSC layer penetrating into the sublayer to the full sublayer depth, the layer thickness on the surface being 0.3 µm. If the BSC layer thickness should be increased, the deposition and destruction cycle is repeated.

The final annealing at 600 °C produces tetragonal zirconium dioxide with a density of 99.99% of the theoretical one and a grain size of 10 - 30 nm.

Example 7.4. Method of fabricating a pair of an anode the surface of which contains electrolyte of stabilized zirconium dioxide and dense SDC electrolyte.

The anode was kermet 50%NiO - 50% 8YSZ. The 8YSZ electrolyte layer had a density of 2 µm and a porosity of 10%.

The dense SDC electrolyte layer is produced using a solution of a mixture of cerium and samarium carboxylates in toluene with a total zirconium and samarium concentration of 0.05 mole/l, their molar ratio corresponding to the (CeO₂)_{0.8} (SmO_{1.5})_{0.2} stoichiometric composition.

The solution is deposited onto the surface heated to 400 °C by multiple printing at atmospheric pressure in an argon atmosphere. Under these conditions, the pores and 8YSZ defects are covered, and a dense (CeO₂)_{0.8} (SmO_{1.5})_{0.2} electrolyte layer forms. After 20 deposition cycles the outer (CeO₂)_{0.8} (SmO_{1.5})_{0.2} electrolyte layer reached 3 µm.

## Claims

1. Electrode-electrolyte pair comprising a microporous electrode to the surface of which is deposited a multilayered solid electrolyte based on cerium dioxide with stabilizing additions, the solid electrolyte consisting of the inner nanoporous three-dimensional solid electrolyte layer with a grain size of within 1000 nm which fills, at least partially, the surface pores of the microporous electrode to a depth of 5 - 50 µm, and a dense outer electrode layer with a grain size of within 1000 nm located on the surface of said inner layer.

2. Electrode-electrolyte pair according to Claim 1, wherein said inner and outer elec-trolyte layers have similar or different compositions.

3. Electrode-electrolyte pair according to Claim 1, wherein said inner electrolyte layer has a combined amorphous and nanocrystalline structure.

4. Electrode-electrolyte pair according to Claim 1, wherein said outer electrolyte layer has an amorphous structure.

5. Electrode-electrolyte pair according to Claim 1, wherein said stabilizing additions are yttrium and/or alkaline-earth and/or rare earth metals and/or bismuth.

6. Electrode-electrolyte pair according to Claim 1, wherein said electrode is made of a microporous ceramic or metallic or metalloceramic material with pore sizes of above 1 µm.

7. Electrode-electrolyte pair according to Claims 1 or 6, wherein said electrode is a cathode or anode of flat or pipe-like shape.

8. Electrode-electrolyte pair according to Claim 7, wherein said anode is made of a volume mesh or a foam material.

9. Electrode-electrolyte pair fabrication method comprising the formation, on the microporous electrode surface, of a partially electrode-penetrating multilayered solid electrolyte based on cerium dioxide with stabilizing additions, to which end the microporous electrode surface is initially impregnated with organogel consisting of particles of cerium dioxide with stabilizing additions and an organic solution containing organic salts of cerium and the stabilizing metals, and destruction of the organogel organic part that leads to the chemical deposition of the inner nanoporous three-dimensional solid electrolyte layer on the electrode surface, following which the inner organogel layer is deposited onto the surface, said layer consisting of nanosized particles of cerium dioxide with stabilizing additions and an organic solution containing organic salts of cerium and the stabilizing metals, and destruction of the organogel organic part that leads to the chemical deposition of the dense outer layer of the multilayered electrolyte onto the inner layer surface.

10. Method according to Claim 9, wherein said inner and outer electrolyte layers are produced using organogel of similar or different compositions.

11. Method according to Claim 10, wherein said stabilizing additions are yttrium and/or alkaline-earth and/or rare earth metals and/or bismuth.

12. Method according to Claim 10, wherein the impregnation of said porous electrode surface with organogel is performed in vacuum of by mechanical pressing the organogel into the porous electrode surface.

13. Method according to Claim 10, wherein said destruction is performed by high-energy impact that causes the decomposition of the organic part of the organogel, e.g. thermal, induction or infrared heating, or electron or laser beam impact or plasmachemical impact.

14. Method according to Claim 13, wherein said organogel destruction is performed with high-rate pyrolysis at temperatures within 800°C in an oxidizing, inert or weakly reducing gas atmosphere.

15. Method according to Claim 9, wherein organogel organic part destruction is performed simultaneously or sequentially with the impregnation or organogel deposition onto the inner layer surface.

16. Method according to Claim 15, wherein during organogel impregnation of the electrode or organogel deposition to the inner layer surface with simultaneous destruction, the organogel is deposited to the surface to be coated by spraying or printing.

17. Method according to Claim 15, wherein during organogel impregnation of the electrode or organogel deposition to the inner layer surface with subsequent destruction, the organogel is deposited to the cold surface of the electrode or the inner layer with subsequent high-rate heating of the electrode.

18. Method according to Claim 9, wherein organogel impregnation of the electrode or organogel deposition to the inner layer surface and organogel destruction are performed in one or multiple stages.

19. Organogel used for the fabrication of the electrode-electrolyte pair contains nanosized particles of cerium dioxide with stabilizing additions and an organic solution containing organic salts of cerium and the stabilizing metals, a mixture of α-branching carbonic acids with the general formula H(CH₂-CH₂)ₙCR'R"-COOH, where R' is CH₃, R" is CₘH₍ₘ₊₁₎ and m is from 2 to 6, with an average molecular weight of 140-250.

20. Organogel according to Claim 19, wherein said stabilizing additions are yttrium and/or alkaline-earth and/or rare earth metals and/or bismuth.

21. Organogel according to Claim 19, wherein said organic solvent is a mixture of α-branching carbonic acids with the general formula H(CH₂-CH₂)ₙCR'R"-COOH, where R' is CH₃, R" is CₘH(ₘ₊₁) and m is from 2 to 6, with an average molecular weight of 140-250, or carbonic acid and/or any organic solvent of carbonic acid metal salts.

22. Organogel according to Claim 19, wherein said organogel contains nanosized particles 3 to 100 nm in size.

23. Organogel according to Claim 19, wherein the concentration of stabilizing additions in cerium and metal salts in the organogel is selected at 0.05 to 1 mole/l in a ratio corresponding to the electrolyte stoichiometric composition.

24. Organogel according to Claim 19, wherein the volume ratio of the nanosized particles in the organogel is within 85%.

25. Electrode-electrolyte pair comprising a nanoporous electrode to the surface of which is deposited a layer or dense three-dimensioned electrolyte based on cerium dioxide with stabilizing additions the grain size of which is within 1000 nm, the electrolyte filling the surface pores of the nanoporous electrode to a depth of 1 - 5 µm.

26. Electrode-electrolyte pair according to Claim 25, wherein said electrolyte has an amorphous structure.

27. Electrode-electrolyte pair according to Claim 25, wherein said stabilizing additions are yttrium and/or alkaline-earth and/or rare earth metals and/or bismuth.

28. Electrode-electrolyte pair according to Claim 25, wherein said electrode is in a microporous ceramic or metallic or metalloceramic material with pore sizes of within 1 µm.

29. Electrode-electrolyte pair according to Claim 25, wherein said electrode is an anode or cathode with a flat or pipe-like shape.

30. Electrode-electrolyte pair fabrication method comprising the formation, on the microporous electrode surface, of a dense three-dimensional solid electrolyte layer based on cerium dioxide with stabilizing additions, for which end the nanoporous electrode surface is initially impregnated with an organic solution containing organic salts of cerium and the stabilizing metals, a mixture of α-branching carbonic acids with the general formula H(CH₂-CH₂)ₙCR'R"-COOH, where R' is CH₃, R" is CₘH(ₘ₊₁) and m is from 2 to 6, with an average molecular weight of 140-250, and destruction of the organogel organic part that leads to the chemical deposition of the solid electrolyte on the electrode surface.

31. Method according to Claim 30, wherein said stabilizing additions are are yttrium and/or alkaline-earth and/or rare earth metals and/or bismuth.

32. Method according to Claim 30, wherein said organic solvent is carbonic acid or toluene or octanol or any organic solvent of carbonic acid metal salts.

33. Method according to Claim 30, wherein said destruction is performed by high-energy impact that causes the decomposition of the organic part of the organogel, e.g. thermal, induction or infrared heating, or electron or laser beam impact or plasmachemical impact.

34. Method according to Claim 33, wherein said organogel destruction is performed with high-rate pyrolysis at temperatures within 800°C in an oxidizing, inert or weakly reducing gas atmosphere.

35. Method according to Claim 30, wherein said organogel organic part destruction is performed simultaneously or sequentially with impregnation.

36. Method according to Claim 35, wherein during electrode impregnation with simultaneous destruction, the solution is deposited to the surface to be coated by spraying or printing.

37. Method according to Claim 35, wherein during electrode impregnation with subsequent destruction, the solution is deposited to the cold surface of the electrode with subsequent high-rate heating of the electrode.

38. Method according to Claim 30, wherein the concentration of stabilizing additions is selected at 0.05 to 1 mole/I in a ratio corresponding to the electrolyte stoichiometric composition.

39. Organogel according to Claim 30, wherein said solution is deposited onto the electrode surface and destruction in one or multiple stages.
